# EUROPÄISCHE PATENTANMELDUNG

(11) **EP 2 148 266 A2**
(43) Veröffentlichungstag der Anmeldung: **27.01.2010**
(21) Anmeldenummer: 09009440.0
(22) Anmeldetag: 21.07.2009
(51) Int. Cl.: G06F 3/045

(54) **Touchscreen zum Steuern von Geräten oder Maschinen**

(30) Priorität: 24.07.2008 DE 102008034471
(71) Anmelder: SCHURTER GmbH, 79346 Endingen (DE)
(72) Erfinder: Maurer, Roland, 79365 Rheinhausen (DE); Ochs, Bruno, 4054 Basel (CH)
(74) Vertreter: Goy, Wolfgang

(57) **Zusammenfassung**

Ein Touchscreen aus einer Basisplatte 1 mit elektrisch leitender Beschichtung 2 und einer flexiblen Kunststoffolie 3 mit elektrisch leitender Beschichtung 4 definiert in der elektrisch leitenden Beschichtung 4 der flexiblen Kunststoffolie 3 elektrisch voneinander isolierte Beschichtungsfelder 9. Dadurch kann eine Betätigung mit mindestens zwei Fingern gleichzeitig erfolgen.

## Beschreibung

Die Erfindung betrifft einen Touchscreen zum Steuern von Geräten oder Maschinen nach dem Oberbegriff des Anspruchs 1.

Der erfindungsgemäße Touchscreen dient zum Steuern von Geräten oder Maschinen. Diese Steuerung von Geräten oder Maschinen ist dabei im allgemeinsten sowie im weitesten Sinne zu verstehen, nämlich immer dann, wenn mittels des erfindungsgemäßen Touchscreens elektrische Signale erzeugt werden, welche als Steuersignale für Geräte oder Maschinen verwendet werden.

Unter einem "Touchscreen" versteht man einen Tastschirm oder Sensorbildschirm. Es handelt sich dabei um ein Eingabegerät für Computer, bei dem durch Berühren von Teilen eines Bildes der Programmablauf eines Computers (oder allgemeiner eines technischen Gerätes) direkt gesteuert werden kann. Die technische Umsetzung der Befehlseingabe ist dabei für den Nutzer quasi nicht sichtbar und erzeugt so den Eindruck einer unmittelbaren Steuerung eines Computers durch Fingerberührung oder durch Berührung mittels eines Zeigestiftes. Dadurch wird insgesamt die Anzeige des Cursors einer Maus überflüssig.

Bekannte Touchscreens bestehen aus einer Basisplatte aus Glas. Sie ist mit einer ersten elektrisch leitenden Beschichtung versehen. Bei dieser Beschichtung handelt es sich insbesondere um ITO (Indiumzinnoxid). Oberhalb dieser Basisplatte befindet sich mit einem sehr geringen Abstand eine flexible Kunststoffolie. Diese ist auf der der Basisplatte zugewandten Seite ebenfalls mit einer elektrisch leitenden Beschichtung aus ITO versehen. Bei diesem Touchscreen wird die Spannung der Betätigungskoordinaten über die elektrisch leitfähige Beschichtung der flexiblen Kunststoffolie abgegriffen. Diese Folie hat dabei keinen Einfluß auf die Funktion des Touchscreens und dient nur zum Spannungsabgriff. Die Steuereinrichtung des Touchscreens leitet die Spannung auf die elektrische Beschichtung der Basisplatte und ermittelt alternierend den Spannungswert in die beiden Koordinatenrichtungen entsprechend der Betätigungsposition.

Mit diesen analog-resistiven Touchscreens ist eine Dateneingabe mit zwei Fingern gleichzeitig nicht möglich. Denn bei Betätigung an zwei Stellen ermittelt die Auswerteeinrichtung den Mittelwert. Dies bedeutet, daß der Zeiger auf dem Bildschirm in die Mitte dieser Doppelbetätigung springt.

Davon ausgehend liegt der Erfindung die **Aufgabe** zugrunde, bei einem Touchscreen der eingangs angegebenen Art die Möglichkeit der Betätigung mit mindestens zwei Fingern gleichzeitig zu ermöglichen.

Die technische **Lösung** ist gekennzeichnet durch die Merkmale im Kennzeichen des Anspruchs 1.

Dadurch ist ein Multitouchscreen in analog-resistiver Technologie geschaffen, welcher die Möglichkeit der Betätigung mit wenigstens zwei Fingern gleichzeitig ermöglicht. Dies bedeutet, daß eine Multi-Touch-Funktion möglich ist, wobei die Dateneingabe mit mehreren Fingern gleichzeitig erfolgt. Jeder Finger erzeugt dabei jeweils ein eindeutiges, individuelles Steuersignal. Ein Anwendungsgebiet des erfindungsgemäßen Touchscreens sind beispielsweise Sicherheitsanwendungen. Dort besteht oft die Anforderung, Befehle mit beiden Händen auszulösen. So kann nunmehr mit dem erfindungsgemäßen Touchscreen mit einem Finger eine auszuführende Aktion angefordert und mit dem zweiten Finger der Befehl ausgeführt werden, jedoch nur, wenn beide Finger den Touchscreen betätigen. In der Medizintechnik ist es unter dem Aspekt der Sicherheit von Bedeutung, daß bestimmte Aktionen nur mit zwei bestätigten Schaltbefehlen ausgelöst werden können. Ein unbeabsichtigtes Starten von Aktionen oder Einstellungsänderungen von Pegeln durch ungewollte Betätigung ist somit ausgeschlossen. Ein weiteres Anwendungsgebiet ist die direkte Menüführung. Zur dieser direkten Menüführung ermöglicht die Multifingertauglichkeit, mit einem Finger ein Untermenü zu öffnen und gleichzeitig mit einem weiteren Finger Werte zu ändern oder zu setzen. Dadurch entfällt eine aufwendige Menüführung. Ein weiteres Anwendungsgebiet sieht vor, daß der eine Finger stationär auf einem Betätigungsfeld ruht, während der andere Finger mehrere Betätigungsfelder überstreicht. Weitere Anwendungsmöglichkeiten sind denkbar, und zwar immer dann, wenn zwei oder mehrere Finger gleichzeitig Signale auslösen sollen oder müssen.

Eine bevorzugte technische Realisierung des Multitouchscreens schlägt die Weiterbildung gemäß Anspruch 2 vor. Die Grundidee dabei besteht darin, daß von einer durchgehenden, einstückigen Basisplatte und/oder Kunststoffolie ausgegangen wird und dabei die eine der beiden Beschichtungen, also die Beschichtung entweder der Basisplatte oder die Beschichtung der flexiblen Kunststoffolie derart in elektrisch voneinander isolierte Beschichtungsfelder unterteilt wird, daß über die dadurch definierten elektrisch getrennten Felder (beispielsweise zwei oder vier Felder) gleichzeitig die Spannung abgegriffen werden kann. Dadurch entstehen mehrere unabhängige Betätigungsfelder in der Bedienfläche des Touchscreens. Diese können mit einer entsprechenden Anzahl von Fingern gleichzeitig betätigt werden. Die Gesamtfunktion des Touchscreens wird dabei nicht beeinträchtigt. Der Touchscreen kann - weiterhin - über die gesamte aktive Fläche betätigt werden. Die elektrisch leitenden Beschichtungsfelder sind dabei jeweils mit elektrischen Anschlüssen für die elektronische Steuer- und Auswerteeinrichtung versehen. Damit diese elektrischen Anschlüsse problemlos kontaktiert werden können; sieht die Erfindung vor, daß die Beschichtungsfelder bis zum Rand des Touchscreens reichen. Darunter ist zu verstehen, daß es innerhalb der Gesamtbeschichtung keine Inseln gibt, sondern daß jedes Beschichtungsfeld vom Rand des Touchscreens her elektrisch kontaktiert werden kann.

Vorzugsweise ist gemäß der Weiterbildung in Anspruch 3 die elektrisch leitende Beschichtung der flexiblen Kunststoffolie unterteilt. Dies bedeutet, daß bezüglich der elektrischen Beschichtung der Basisplatte keine Veränderungen notwendig sind. Alternativ wäre es natürlich auch möglich, die Unterteilung der Betätigungsfelder in der Beschichtung der Basisplatte vorzunehmen, so daß dann die elektrisch leitende Beschichtung der Kunststoffolie unangetastet bleibt.

Gemäß der Weiterbildung in Anspruch 4 wird eine erste Herstellungsmethode der Beschichtungsfelder vorgeschlagen. Die Grundidee besteht darin, die durchgängig homogene elektrisch leitende Beschichtung auf der Folie per Laser oder per Ätzvorgang zu durchtrennen.

Eine Alternative hierzu schlägt gemäß Anspruch 5 dahingehend vor, daß bereits während des Aufdruckens der elektrischen Beschichtung die einzelnen, elektrisch voneinander isolierten Betätigungsfelder definiert werden.

Durch die Weiterbildung in Anspruch 6 ist ein Touchscreen geschaffen, bei welchem die Gefahr der elektrischen Falschauslösung auf technisch einfache Weise nicht gegeben ist und bei welchem der Schaltimpuls mit einer geringen Auslösekraft ausgelöst werden kann.

Die Grundidee besteht dabei darin, daß zwischen den Beschichtungen ein matrixartiges Netz von Isolationspunkten in Form von Abstandhaltern vorgesehen ist. Das Netz, welches die Matrixpunkte definiert, kann rechteckförmig, quadratisch, rautenförmig oder dgl. sein. Das Netz kann regelmäßig oder unregelmäßig sein. Die Abstandhalter sind derart bemessen und angeordnet, daß im Ruhezustand des Touchscreens die beiden zueinander korrespondierenden elektrisch leitenden Beschichtungen nicht in elektrischen Kontakt miteinander gelangen. Denn diese Isolationspunkte gewährleisten immer einen geringen Abstand zwischen den elektrisch leitenden Beschichtungen. Dies bedeutet aber auch, daß aufgrund dieser Isolationspunkte der Abstand zwischen den Beschichtungen sehr gering gestaltet werden kann, so daß der Schaltimpuls mit einem sehr geringen Kraftaufwand ausgelöst werden kann. Somit werden insgesamt in der Ruhephase die elektrisch leitenden Beschichtungen durch eine spezielle matrixartige Anordnung der Abstandhalter voneinander getrennt, so daß ein Kurzschließen bei Nichtbetätigung ausgeschlossen ist. Weiterhin sind nur geringe Betätigungskräfte notwendig. Es ist daher nur ein kurzes Antippen erforderlich, da aufgrund der quasi weglosen Wegstrecke zum Schließen der elektrisch leitenden Beschichtungen eine komfortable und ermüdungsfreie Bedienung möglich ist. Insbesondere ist durch das erfindungsgemäße System auch eine geschlossene und homogene Oberfläche realisierbar. Die Grundidee besteht somit darin, die Fläche des Touchscreens mit einem relativ engmaschigen, zweidimensionalen Netz von Abstandhaltern zu überziehen. Da somit die Abstandhalter engmaschig wirksam sind, kann der freie Abstand zwischen der Leiterplatte und der Schaltfolie sehr klein ausgeführt sein, ohne daß die Schaltfolie beispielsweise durch Durchhängen oder durch leichte Berührung Fehlauslösungen bewirken kann. Dadurch kann auch die Fläche des Tasters beliebig groß sein.

Gemäß der Weiterbildung in Anspruch 7 ist der Abstandhalter vorzugsweise abgerundet konvex ausgebildet. Dabei kann es sich bei den Abstandhaltern um Kugelabschnitte handeln.

Die Weiterbildung gemäß Anspruch 8 schlägt vor, daß die Abstandhalter auf der Basisplatte und/oder auf der elektrisch leitenden Beschichtung der Basisplatte angeordnet sind. Somit bilden die Abstandhalter zusammen mit der Basisplatte eine feste Einheit. Dabei liegt die Folie in der vorbeschriebenen Weise auf den Abstandhaltern als Isolationspunkte auf, ohne in dieser Ruhephase in elektrisch leitenden Kontakt mit der elektrischen Beschichtung der Basisplatte zu gelangen. Sobald jedoch die Schaltfolie betätigt wird, wölbt sich diese zwischen den Abstandhaltern in Richtung Basisplatte und schließt den elektrischen Kontakt zwischen den zueinander korrespondierenden elektrisch leitenden Beschichtungen. Die Abstandhalter sind dabei aufgedruckt. Als Druckverfahren kommt das Siebdruckverfahren in Frage, welches einen entsprechenden Lack auf die Oberfläche der Leiterplatte aufdruckt.

Durch diesen aufgedruckten Lack werden - wie ausgeführt - die beiden gegenüberliegenden Beschichtungen in der Ruhelage elektrisch voneinander getrennt.

Gemäß der Weiterbildung in Anspruch 9 ist zwischen der Oberseite der Abstandhalter und der gegenüberliegenden elektrisch leitfähigen Beschichtung ein Zwischenabstand vorgesehen. Dies bedeutet, daß bei einer geringfügigen Betätigung der Schaltfolie diese zunächst auf den Abstandhaltern aufliegt.

Eine weitere bevorzugte Weiterbildung schlägt schließlich gemäß Anspruch 10 für die Erzeugung der elektrischen Signale die analog-resistive 5-Draht-Technologie vor. Die Grundidee besteht im Hinblick auf den erfindungsgemäßen Touchscreen dabei darin, daß die eine Beschichtung, nämlich die durchgehende Beschichtung an den vier Ecken des Touchscreens jeweils elektrische Anschlüsse besitzt, während die gegenüberliegenden einzelnen Beschichtungsfelder des anderen Trägers, welche jeweils ein Betätigungsfeld definieren, jeweils einen - einzigen - elektrischen Anschluß besitzen. Die vier Anschlüsse der durchgehenden Beschichtung definieren dabei zwei Anschluß-Paare, deren Anschlüsse jeweils diagonal einander gegenüber liegen. An diese beiden Anschluß-Paare wird abwechselnd jeweils ein elektrisches Potential angelegt, um dadurch die X- sowie Y-Koordinate der Berührung auf dem Touchscreen zu messen. Der Potentialabgriff erfolgt dann mittels desjenigen Anschlusses, dessen Beschichtungsfeld bzw. Betätigungsfeld durch den Finger betätigt worden ist. Denn an diesem Berührungspunkt liegt das Spannungspotential an. Da jedem der Beschichtungsfelder bzw. Betätigungsfelder jeweils ein Anschluß zugeordnet ist, kann das betätigte Betätigungsfeld identifiziert und ein Signal abgegeben werden. Neben der bloßen Identifizierung des Betätigungsfeldes ist es darüber hinaus möglich, die genaue Position des Berührungspunktes in diesem Betätigungsfeld zu ermitteln.

Ausführungsbeispiele eines erfindungsgemäßen Touchscreens werden nachfolgend anhand der Zeichnungen beschrieben. In diesen zeigt:
- Fig. 1a: eine schematische Ansicht eines Touchscreens, wie er aus dem Stand der Technik bekannt ist;
- Fig. 1b: einen Schnitt durch den Touchscreen in Fig. 1a in vergrößertem Maßstab;
- Fig. 2a: eine erste Ausführungsform des erfindungsgemäßen Touchscreens mit zwei Betätigungsfeldern;
- Fig. 2b: einen Schnitt durch den Touchscreen in Fig. 2a in vergrößertem Maßstab;
- Fig. 2c: eine schematische Ansicht des Touchscreens mit den beiden Betätigungsfeldern;
- Fig. 3a: eine zweite Ausführungsform des erfindungsgemäßen Touchscreens mit vier Betätigungsfeldern;
- Fig. 3b: eine schematische Ansicht des Touchscreens mit den vier Betätigungsfeldern;
- Fig. 4: eine dritte Ausführungsform des Touchscreens;
- Fig. 5: eine vierte Ausführungsform des Touchscreens;
- Fig. 6: eine fünfte Ausführungsform des Touchscreens;
- Fig. 7: eine Detailvergrößerung des Schnitts durch eines der Ausführungsformen des Touchscreens zur Verdeutlichung der Abstandhalter;
- Fig. 8: eine perspektivische Ansicht des Touchscreens mit der Basisplatte sowie mit der Kunststoffolie in einer Art Explosivdarstellung;
- Fig. 9: ein Blockschaltbild des Touchscreens mit Elektronik.

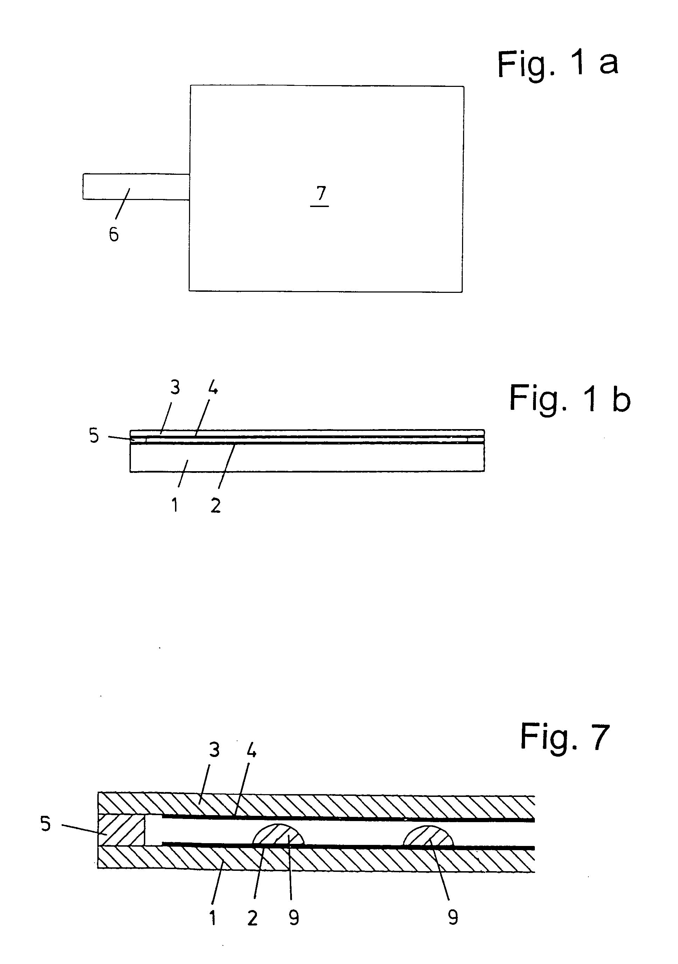

In Fig. 1a und 1b ist ein Touchscreen dargestellt, wie er aus dem Stand der Technik bekannt ist.

Dabei ist zunächst eine Basisplatte 1 aus Glas vorgesehen, welche durchgehend mit einer ersten, elektrisch leitenden Beschichtung 2 aus ITO (Indiumzinnoxid) versehen ist. Weiterhin ist eine flexible Kunststoffolie 3 vorgesehen. Diese ist auf ihrer der Basisplatte 1 zugewandten Seite ebenfalls mit einer zweiten elektrisch leitenden Beschichtung 4 versehen. Zwischen der Basisplatte 1 und der flexiblen Kunststoffolie 3 befindet sich ein Rahmen 5, welcher die beiden vorgenannten Elemente und insbesondere die beiden elektrisch leitenden Beschichtungen 2, 4 auf Abstand hält. Schließlich sind noch elektrische Anschlüsse 6 angedeutet.

Die Funktionsweise ist wie folgt:

Die elektrisch leitenden Beschichtungen 2, 4 der Basisplatte 1 sowie der flexiblen Kunststoffolie 3 definieren ein Betätigungsfeld. Drückt eine Person mit dem Finger oder mit einem Zeigestift auf die flexible Kunststoffolie 3, gelangen die beiden elektrisch leitenden Beschichtungen 2, 4 in elektrischen Kontakt miteinander. Aufgrund der elektrischen Anschlüsse 6 kann dadurch das anliegende elektrische Potential gemessen und daraus die Position abgeleitet werden.

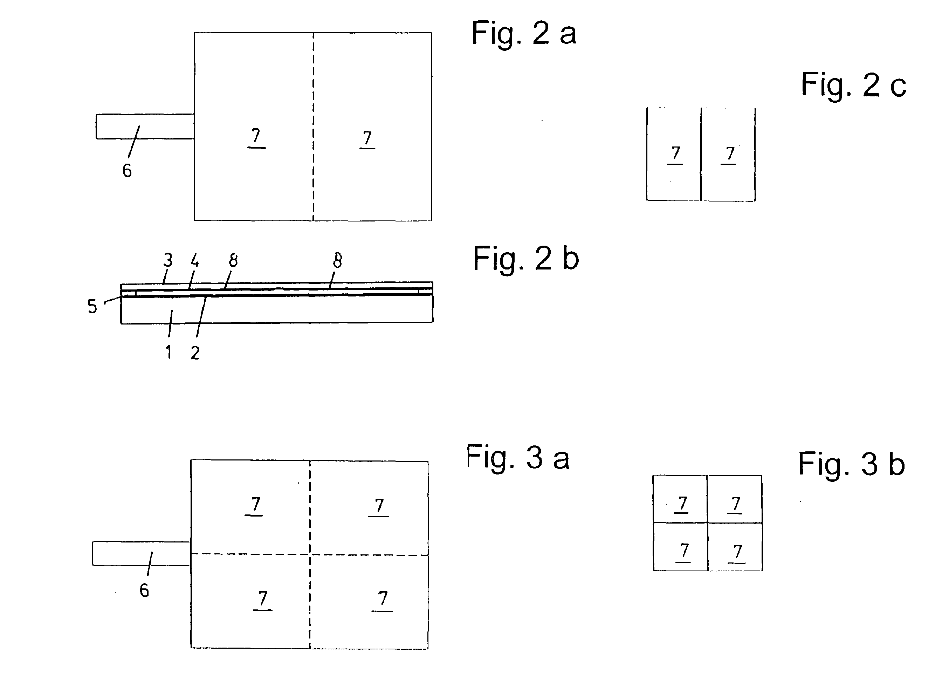

Bei der ersten Ausführungsform der Erfindung in den Fig. 2a bis 2c ist die elektrisch leitende Beschichtung 4 der flexiblen Kunststoffolie 3 durch Lasern oder durch Wegätzen derart durchgehend unterbrochen, daß zwei elektrisch voneinander isolierte Hälften entstehen. Die elektrisch leitende Beschichtung 2 der Basisplatte 1 ist hingegen unverändert. Die Unterteilung der elektrisch leitenden Beschichtung 4 definiert diese in zwei Beschichtungsfelder 8. Diese definieren jeweils ein Betätigungsfeld 7. Auch hier sind die Beschichtungsfelder 8 über die elektrischen Anschlüsse 6 an Spannungspotentiale angeschlossen, die gemessen werden können.

Die Funktionsweise ist wie folgt:

Eine Person kann mit zwei Fingern die beiden Betätigungsfelder 7 gleichzeitig betätigen, so daß entsprechende unterschiedliche Schaltimpulse ausgelöst werden können.

Die Ausführungsform der Fig. 3a und 3b zeigt eine zweite Ausführungsform des erfindungsgemäßen Touchscreens. Im Vergleich zur Ausführungsform in den Fig. 2a bis 2c erfolgte hier noch eine waagrechte Unterteilung der elektrisch leitenden Beschichtung 4 der flexiblen Kunststoffolie 3 in entsprechender Weise, so daß insgesamt vier Beschichtungsfelder 8 und dadurch vier Betätigungsfelder 7 definiert sind. Auch hier sind die vier Beschichtungsfelder 8 mit entsprechenden elektrischen Anschlüssen 6 kontaktiert.

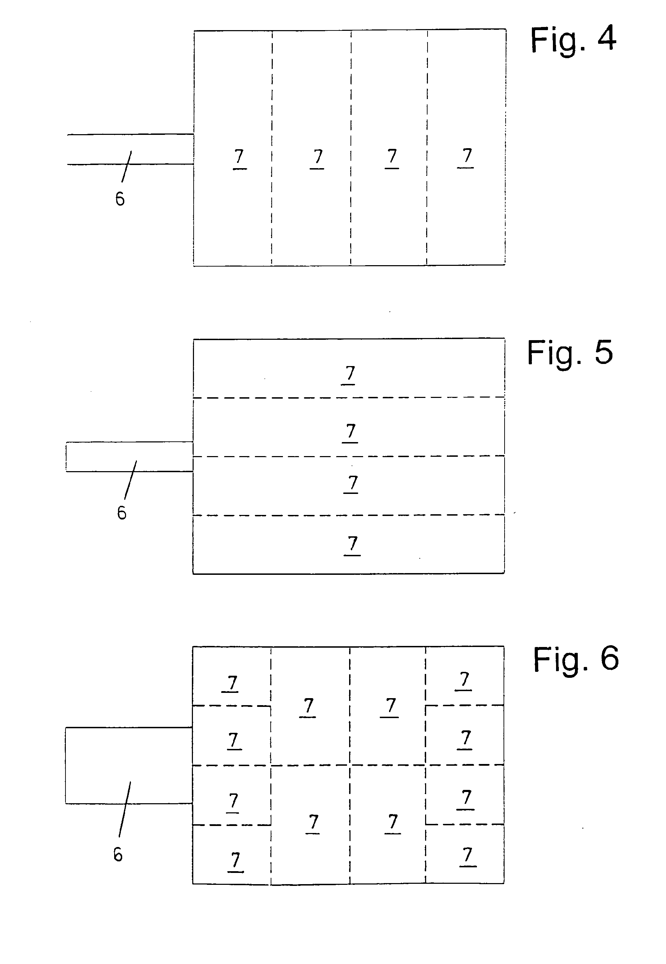

Die Fig. 4 bis Fig. 6 zeigen weitere Formen der Beschichtungsfelder 8 bzw. Betätigungsfelder 7. Das Grundprinzip besteht immer darin, daß durch Entfernen eines sehr dünnen Streifens der elektrisch leitenden Beschichtung 4 der flexiblen Kunststoffolie 3 Beschichtungsfelder 8 definiert werden, welche elektrisch voneinander isoliert sind. Für die elektrische Kontaktierung der Anschlüsse weisen diese Beschichtungsfelder 8 jeweils einen Außenrand auf. Beschichtungsfelder 8 in Form von im Innern befindlichen Inseln sind nicht vorgesehen. Auch hier weisen die Beschichtungsfelder 8 jeweils elektrische Anschlüsse 6 auf.

Um die flexible Kunststoffolie 3 mit ihrer elektrisch leitenden Beschichtung 4 auf Abstand zu der elektrisch leitenden Beschichtung 2 der Basisplatte 1 zu halten, zeigt Fig. 7 sogenannte Abstandhalter 9. Diese sind über die Fläche des Touchscreens gesehen matrixartig angeordnet. Die höckerartigen Abstandhalter 9 sind dabei zur Schaffung von Isolierpunkten im Siebdruckverfahren auf die Oberfläche der Basisplatte 1 bzw. deren Beschichtung 3 aufgedruckt.

Fig. 7 zeigt den Ruhezustand des Touchscreens. Dabei hält die elektrisch leitfähige Beschichtung 4 aufgrund der Abstandhalter 9 einen wohldefinierten Abstand zu der elektrisch leitfähige Beschichtung 2 der Basisplatte 1 ein, ohne daß die Gefahr besteht, daß die beiden elektrisch leitenden Beschichtungen 2, 4 in Kontakt miteinander gelangen und einen Schaltimpuls auslösen.

Wird auf die Kunststoffolie 3 ein Druck ausgeübt, wird diese dadurch in der Zeichnung nach unten bewegt, so daß die beiden elektrisch leitenden Beschichtungen 2, 4 miteinander in elektrischen Kontakt gelangen. Dabei wölbt sich die Kunststoffolie 3 mit ihrer elektrisch leitenden Beschichtung 4 zwischen den Abstandhaltern 9 nach unten.

Nach Beendigung der Betätigungskraft, kehrt die Kunststoffolie 3 aufgrund ihrer elastischen Flexibilität wieder in die zu der Basisplatte 1 parallele Ausgangsstellung zurück, in welcher sie durch die Abstandhalter 9 wieder auf Distanz zu der Basisplatte 1 gehalten wird.

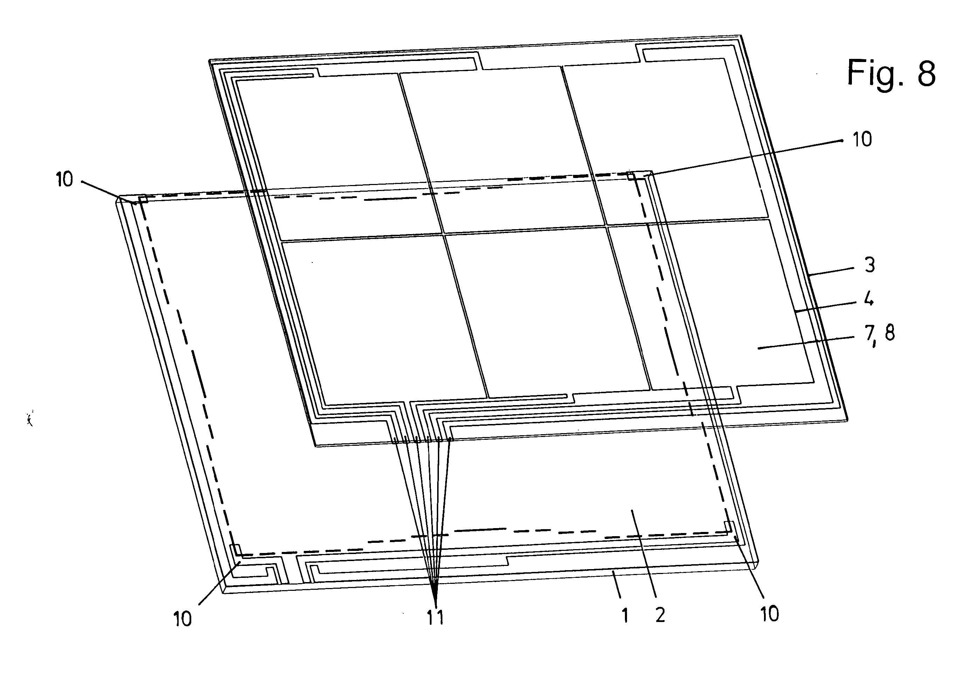

Fig. 8 zeigt - noch einmal - den Touchscreen hinsichtlich seiner Verdrahtung im Hinblick auf die 5-Draht-Technologie.

Zunächst ist die Basisplatte 1 mit ihrer durchgehenden, elektrisch leitenden Beschichtung 2 dargestellt. Dargestellt ist weiterhin, daß diese rechteckige Basisplatte 1 an ihren vier Ecken jeweils einen elektrischen Anschluß 10 aufweist. Diese vier Anschlüsse 10 sind zu einer gemeinsamen Stelle der Basisplatte 1 über entsprechende Leiterbahnen geführt.

Bei der flexiblen Kunststoffolie 3 ist erkennbar, daß diese sechs Beschichtungsfelder 8 aufweist, welche elektrisch voneinander isoliert sind. Dabei ist weiterhin erkennbar, daß jedes dieser sechs Beschichtungsfelder 8 jeweils einen - einzigen - elektrischen Anschluß 11 aufweist. Diese sechs elektrischen Anschlüsse 11 sind gleichermaßen über Leiterbahnen zu einer vorbestimmten Stelle geführt, welche mit der zusammengeführten Stelle der Anschlüsse 10 korrespondiert.

Die elektrische Funktionsweise ist wie folgt:

Die vier elektrischen Anschlüsse 10 der Basisplatte 1 definieren zwei Anschluß-Paare, wobei die beiden Anschlüsse 10 eines jeden Anschluß-Paares diagonal einander gegenüberliegen. An diese beiden Anschluß-Paare wird abwechselnd ein elektrisches Potential angelegt, um dadurch zunächst die X-Koordinate und anschließend die Y-Koordinate des Berührungspunktes zu bestimmen.

Der Abgriff des elektrischen Potentials erfolgt mittels des betätigten Beschichtungsfeldes 8 über deren Anschlüsse 11 der flexiblen Kunststoffolie 3. Wird beispielsweise mit einem der Finger ein bestimmtes Betätigungsfeld 7 betätigt und dabei das zugeordnete Beschichtungsfeld 8 mit der elektrisch leitenden Beschichtung 2 der Basisplatte 1 in Kontakt gebracht, liegt aufgrund der elektrischen Kontaktierung an dieser Berührungsstelle ein elektrisches Potential an, welches über den zugeordneten Anschluß 11 gemessen werden kann.

Wird mit einem zweiten Finger ein zweites Betätigungsfeld 7 betätigt, so mißt der diesem Betätigungsfeld 7 zugeordnete Anschluß 11 gleichermaßen das anliegende Potential und ermittelt damit die XY-Koordinate. Werden mehr als zwei Finger eingesetzt, gilt dies für diese dann entsprechend.

Auf diese Weise läßt sich bestimmen, wenn ein bestimmtes Betätigungsfeld 7 mittels einem der Finger betätigt worden ist. Es kann dabei genügen festzustellen, daß überhaupt dieses Betätigungsfeld 7 betätigt worden ist. Darüber hinaus ist es in einer Verfeinerung auch möglich, die exakte Berührungsposition in einem bestimmten Betätigungsfeld 7 zu messen und zu bestimmen. Dies ermöglicht es, dieses Betätigungsfeld 7 in unterschiedliche Bereiche zu unterteilen, um dadurch unterschiedliche Signale für unterschiedliche Steuerungen zu erzeugen.

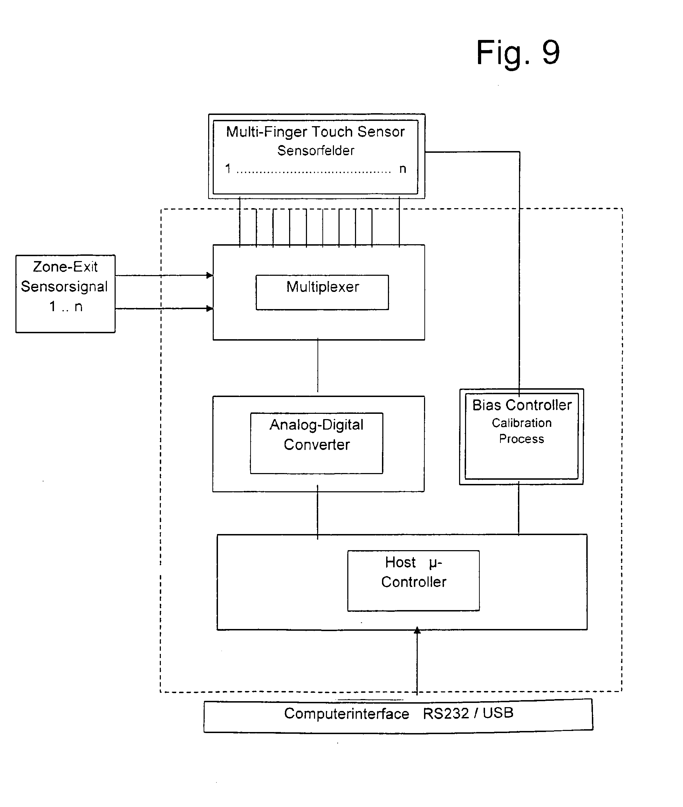

Im Hinblick auf das Bockschaltbild in Fig. 9 kann die Abfrage der Sensorfelder 1 bis n über einen Multiplexer erfolgen. Es erfolgt eine Umwandlung der analogen Positionsspannungen der X- sowie Y-Koordinanten in digitale Positionswerte mit dem AD-Konverter. Der Host Microcontroller sendet die Daten der Position bzw. der Positionen an den Computer.

Der Bias-Controller ist zuständig für die Kalibrierung. Er speichert die Kalibrations-Daten und gibt diese an den Host Microcontroller.

Mit dem Host Microcontroller können über die Software einzelne Zonen aktiviert und deaktiviert werden. Über den Ausgang Zone-Exit kann die Zone ein "Touch-on / Touch-off" - Signal weiterverarbeitet werden, und zwar speziell für Sicherheitsanwendungen. Das Signal ist dabei fest an die Zone gekoppelt, d. h. wie eine Tastfläche. Dies erfolgt im Gegensatz zum Computer-Interface-Ausgang. Dieser liefert die exakten Positionsdaten aus den betätigten Zonen und dient dadurch als Mausersatz.

Der Aktivierung der Zone stehen somit zwei Signalformen zur Verfügung, nämlich zum einen der bzw. die Positionswerte und zum anderen der On-/Off-Wert sämtlicher Zonen. Der Zone-Exit liefert somit eine zusätzliche Information für Sicherheitsanwendungen.

Darüber hinaus kann mit dem Zone-Exit ein weiterer, externer Controller angesteuert werden, z. B. ein Tastaturcontroller. Somit können parallel zur analogen Sensorführung fest Tastensignale verarbeitet werden. Beispiel ist die Eingabe von Stg-Alt-Del über den Multi-Finger-Sensor zur PC-Anmeldung oder zum Abmelden des Systems. Eine Hardware-Tastatur ist somit nicht mehr notwendig. Auch ist der Einsatz der Shift-Taste möglich, wenn diese gedrückt gehalten wird, um anschließend groß zu schreiben.

### Bezugszeichenliste

- 1: Basisplatte
- 2: elektrisch leitende Beschichtung
- 3: flexible Kunststoffolie
- 4: elektrisch leitende Beschichtung
- 5: Rahmen
- 6: elektrische Anschlüsse
- 7: Betätigungsfeld
- 8: Beschichtungsfeld
- 9: Abstandhalter
- 10: Anschlüsse
- 11: Anschlüsse

## Patentansprüche

1. Touchscreen zum Steuern von Geräten oder Maschinen,
mit einer Basisplatte (1), welche mit einer ersten elektrisch leitenden Beschichtung (2) versehen ist,
mit einer zu der Basisplatte (1) parallelen flexiblen Kunststoffolie (3), welche mit einer zweiten elektrisch leitenden Beschichtung (4) versehen ist, sowie
mit elektrischen Anschlüssen (6, 10, 11) sowie einer elektronischen Steuer- und Auswerteeinrichtung zum Ermitteln derjenigen Position, an welcher die beiden Beschichtungen (2, 4) in elektrischen Kontakt miteinander gebracht worden sind,
**dadurch gekennzeichnet,**
**daß** ein Feld von mehreren, voneinander betätigungsunabhängigen Touchscreens vorgesehen ist, die jeweils ein Betätigungsfeld (7) definieren, und
**daß** wenigstens zwei der Betätigungsfelder (7) oder mehr als zwei Betätigungsfelder (7) oder sämtliche Betätigungsfelder (7) gleichzeitig mittels jeweils einem Finger zur Erzeugung unterschiedlicher Signale derart unabhängig voneinander betätigbar sind, daß auf den einzelnen Betätigungsfeldern (7) die jeweiligen Betätigungspositionen ermittelbar sind oder zumindest ermittelbar ist, daß das jeweilige Betätigungsfeld (7) betätigt worden ist.

2. Tochscreen nach dem vorhergehenden Anspruch,
**dadurch gekennzeichnet,**
**daß** eine der beiden Beschichtungen (2, 4) wenigstens in zwei, voneinander elektrisch isolierte Beschichtungsfelder (8) unterteilt ist,
wobei jedes der Beschichtungsfelder (8) bis zum Rand der Kunstoffolie (3) bzw. der Basisplatte (1) reicht.

3. Touchscreen nach Anspruch 2,
**dadurch gekennzeichnet,**
**daß** die elektrisch leitende Beschichtung (4) der Kunststoffolie (3) unterteilt ist.

4. Touchscreen nach Anspruch 2 oder 3,
**dadurch gekennzeichnet,**
**daß** zur Herstellung der Beschichtungsfelder (8) von einer durchgehenden Beschichtung (2, 4) ausgegangen wird und
**daß** die elektrisch leitende Beschichtung (2, 4) an den entsprechenden Stellen entfernt wird.

5. Touchscreen nach Anspruch 2 oder 3,
**dadurch gekennzeichnet,**
**daß** zur Herstellung der Beschichtungsfelder (8) die Basisplatte (1) oder die Kunststoffolie (3) entsprechend mit der elektrisch leitenden Beschichtung (2, 4) bedruckt wird.

6. Touchscreen nach einem der vorhergehenden Ansprüche,
**dadurch gekennzeichnet,**
**daß** zwischen den beiden elektrisch leitenden Beschichtungen (2, 4) höckerartige Abstandhalter (9) aus einem elektrisch nicht leitenden Material matrixartig angeordnet sind.

7. Touchscreen nach Anspruch 6,
**dadurch gekennzeichnet,**
**daß** die Abstandhalter (9) abgerundet konvex ausgebildet sind.

8. Touchscreen nach Anspruch 6 oder 7,
**dadurch gekennzeichnet,**
**daß** die Abstandhalter (9) direkt auf der Basisplatte (1) oder auf der elektrisch leitenden Beschichtung (3) der Basisplatte (1) angeordnet, insbesondere aufgedruckt sind.

9. Touchscreen nach einem der Ansprüche 6 bis 8,
**dadurch gekennzeichnet,**
**daß** zwischen der Oberseite der Abstandhalter (9) und der gegenüberliegenden elektrisch leitfähigen Beschichtung (4) ein Zwischenabstand vorgesehen ist.

10. Tochscreen nach einem der vorhergehenden Ansprüche,
**dadurch gekennzeichnet,**
**daß** die eine, durchgehende Beschichtung (2), welche sich über die gesamte Fläche des Touchscreens erstreckt, jeweils einen elektrischen Anschluß (10) an den vier Ecken besitzt und
**daß** die Beschichtungsfelder (8) der anderen, in diese Beschichtungsfelder (8) unterteilte Beschichtung (4) jeweils einen einzigen elektrischen Anschluß (11) besitzen,
wobei bei der durchgehenden Beschichtung (2) an die beiden Anschluß-Paare abwechselnd eine elektrische Spannung angelegt wird und
wobei über den Anschluß (11) des betätigten Beschichtungsfeldes (8) die Spannung abgegriffen wird.
